# EUROPÄISCHE PATENTSCHRIFT

(11) **EP 3 421 674 B1**
(45) Veröffentlichungstag und Bekanntmachung des Hinweises auf die Patenterteilung: **07.10.2020**
(21) Anmeldenummer: 18172652.2
(22) Anmeldetag: 16.05.2018
(51) Int. Cl.: E02F 9/26, G06F 3/01, G02B 27/00

(54) **VORRICHTUNG UND VERFAHREN ZUM ABBILDEN VON BEREICHEN**
METHOD AND DEVICE FOR IMAGING AREAS
PROCÉDÉ ET DISPOSITIF DE REPRÉSENTATION DES ZONES

(30) Priorität: 29.06.2017 DE 102017114450
(43) Veröffentlichungstag der Anmeldung: 02.01.2019
(73) Patentinhaber: Grammer AG, 92224 Amberg (DE)
(72) Erfinder: Boving, Marko, 93049 Regensburg (DE)
(74) Vertreter: Hannke, Christian

(56) Entgegenhaltungen:
- DE-A1-102015 204 743
- DE-A1-102016 123 566
- JP-A- 2007 096 638
- JP-A- 2008 307 982
- JP-A- 2016 102 312
- US-A1- 2008 012 938
- US-A1- 2010 289 899

## Beschreibung

Die Erfindung betrifft ein Nutzfahrzeug mit einer Vorrichtung zum Abbilden eines Teilbereichs auf einem Bildschirm, wobei der Teilbereich durch ein Objekt zumindest teilweise verdeckt ist und wobei das Objekt zwischen dem Teilbereich und einem Fahrzeugführer und der Bildschirm zwischen dem Fahrzeugführer und dem Objekt angeordnet ist, wobei der Teilbereich sich in einem von einer Kameraeinrichtung aufgenommenen Bereich befindet.

Es sind aus dem Stand der Technik Kamerasysteme, insbesondere aus der Sicherheitstechnik oder der Überwachungstechnik bekannt, mittels welchen sich Bereiche, die es zu überwachen gilt, auf Monitoren abbilden lassen können und so überwacht werden können. Jedoch wird hier nicht nur ein verdeckter Teil des aufgenommenen Bereichs abgebildet, sondern der gesamte aufgenommene Bereich. Ebenso ist aus dem Stand der Technik kein Einsatzbereich im landwirtschaftlichen Bereich bekannt, um Bereiche, welche beispielsweise von Anbaugeräten oder Teilen des Fahrzeugs verdeckt sind, für einen Fahrzeugführer sichtbar zu machen.

Es ist demzufolge Aufgabe der vorliegenden Erfindung, eine Vorrichtung für ein Nutzfahrzeug anzugeben, mittels welcher verdeckte Teilbereiche für einen Fahrzeugführer sichtbar gemacht werden können.

Bekannte Vorrichtungen, die den Oberbegriff aus Anspruch 1 zeigen, sind z.B. aus folgenden Druckschriften bekannt: DE A1-10 2015 204743,

US2010/289899 A1, DE 10 2016 123566 A1.

Die oben genannte Aufgabe wird gemäß den Merkmalen des Patentanspruches 1 bzw. des Verfahrens des Anspruchs 7 gelöst. Vorteilhafte Ausgestaltungen der Erfindung finden sich in den abhängigen Patentansprüchen.

Kerngedanke der Erfindung ist es, ein Nutzfahrzeug mit einer Vorrichtung zum Abbilden eines Teilbereichs auf einem Bildschirm bereitzustellen, wobei der Teilbereich zumindest teilweise durch ein Objekt verdeckt ist und wobei das Objekt zwischen dem Teilbereich und einem Fahrzeugführer und der Bildschirm zwischen dem Fahrzeugführer und dem Objekt angeordnet ist, wobei der Teilbereich sich in einem von einer Kameraeinrichtung aufgenommenen Bereich befindet, wobei die Vorrichtung eine Bestimmungseinrichtung aufweist, welche dazu vorgesehen und eingerichtet ist, eine Position zumindest eines Auges des Fahrzeugführers und eine Position des Bildschirms zu bestimmen, wobei durch die Bestimmungseinrichtung mittels der Position des Auges und der Position des Bildschirms die Position des Teilbereichs im aufgenommenen Bereich bestimmt ist und dieser Teilbereich durch den Bildschirm dargestellt ist.

Beispielsweise wird ein Teilbereich durch eine Stützsäule der Fahrzeugkabine verdeckt, wobei jedoch der Fahrzeugführer eben gerne diesen hinter der Stützsäule angeordneten Bereich beobachten möchte. Ein Beispiel hierfür könnte ein Mähdrescher sein, bei welchem es wichtig ist, möglichst den gesamten Bereich des Mähwerks beobachten zu können. Teile des Mähwerks sind dem Fahrzeugführer durch die Kabinensäulen verdeckt. Durch die erfindungsgemäße Abbildung des durch die Kabinensäulen verdeckten Bereichs und der erfindungsgemäßen Anordnung der Bildschirme kann der Fahrzeugführer ohne Aufwand den gesamten Bereich des Mähwerks beobachten. Einfach gesagt kann mittels der Vorrichtung das verdeckende Objekt quasi durchsichtig gemacht werden.

Es ist auch denkbar, dass das Objekt, welches verdeckend ist, ebenso ein Bildschirm sein kann. Genauer kann das Objekt ein beliebiges Element in einer Kabine eines Fahrzeuges oder des Fahrzeuges selbst sein, also beispielsweise auch ein Reifen, eine Motorhaube, eine Bedienkonsole, oder dergleichen.

Da im Normalfall auf einem Acker viele Bodenunebenheiten durch das Nutzfahrzeug überfahren werden und daher Kräfte auf eine Fahrzeugkabine, in welcher der Fahrzeugführer sitzt, einwirken, ändert sich insbesondere durch einen sich auslenkenden Fahrzeugsitz die Position des Fahrzeugführers relativ zu der Fahrzeugkabine. Es ändern sich daher auch die Position des Auges des Fahrzeugführers und entsprechend auch der Teilbereich, welcher durch das Objekt verdeckt ist. Erfindungsgemäß ist es daher vorgesehen, dass die Vorrichtung eine Bestimmungseinrichtung aufweist, welche dazu vorgesehen und eingerichtet ist, eine Position zumindest eines Auges des Fahrzeugführers zu bestimmen.

Weiter hängt die Position des Teilbereichs auch von der Orientierung, also der genauen Lage, des Bildschirms ab, insbesondere relativ zu der Nutzfahrzeugkabine. Abhängig von der Position des Bildschirms wird entsprechend erfindungsgemäß ein anderer Teilbereich erfasst und abgebildet.

Mittels der Bestimmungseinrichtung kann aus der Position des Auges und der Position des Bildschirms die Position des Teilbereichs bestimmt werden, so dass dieser Teilbereich anschließend auf dem Bildschirm dargestellt werden kann.

Erfindungsgemäß weist die Bestimmungseinrichtung einen ersten Sensor und einen zweiten Sensor auf, wobei der erste Sensor dazu vorgesehen und eingerichtet ist, die Position des Auges relativ zu einer Nutzfahrzeugkabine zu bestimmen, und wobei der zweite Sensor dazu vorgesehen und ausgebildet ist, die Position des Bildschirms relativ zu der Nutzfahrzeugkabine zu bestimmen.

Gemäß einer weiteren bevorzugten Ausführungsform kann mittels des ersten Sensors zusätzlich ein Blickwinkel des Auges und mittels des zweiten Sensors zusätzlich die Orientierung des Bildschirms relativ zu der Nutzfahrzeugkabine bestimmt sein.

Mittels des ersten Sensors kann gemäß dieser Ausführungsform sowohl die Position des Auges des Fahrzeugführers als auch der Blickwinkel des Auges bestimmt werden. Mittels des zweiten Sensors kann gemäß dieser Ausführungsform sowohl die Position des Bildschirms als auch die Orientierung relativ zu der Nutzfahrzeugkabine bestimmt werden.

Dies ist insbesondere vorteilhaft, da der Teilbereich auch von den weiteren Parametern abhängen kann. So ist es denkbar, dass sich zwar die Position des Auges nicht verändert, sich jedoch der Blickwinkel des Auges verändert. Ebenso kann der Teilbereich auch abhängig von der Orientierung relativ zu der Nutzfahrzeugkabine sein.

Gemäß einer weiteren bevorzugten Ausführungsform können der erste Sensor und der zweite Sensor jeweils als ein Infrarot-Sensor ausgebildet sein.

Gemäß einer weiteren bevorzugten Ausführungsform kann mittels der Bestimmungseinrichtung aus der Position des Auges, insbesondere relativ zu der Nutzfahrzeugkabine, und der Position des Bildschirms, insbesondere relativ zu der Nutzfahrzeugkabine, ein Abstand des Auges zu dem Bildschirm bestimmt werden. Der Teilbereich kann natürlich auch von dem Abstand des Auges zu dem Bildschirm abhängen. Je näher der Bildschirm dem Auge ist, desto mehr Sichtfeld des Auges wird durch den Bildschirm eingenommen. Entsprechend muss dann auch der Teilbereich, welcher auf dem Bildschirm abgebildet wird, ausgewählt sein.

Gemäß einer weiteren Ausführungsform weist die Kameraeinrichtung genau eine Kameraeinheit auf. Gemäß dieser Ausführungsform ist es nötig, eine Kollimierung eines Augenbrennpunkts, welcher im Teilbereich liegt, und einem Brennpunkt der Kameraeinheit durchzuführen. Mittels eines bekannten Algorithmus, welcher von einer Recheneinheit, beispielsweise einem CPU, GPU, CSI oder IC ausgeführt werden kann, kann dann eine Tiefenschärfe eingestellt werden. Nötig sind hierfür die folgenden Parameter: Abstand Auge zu Teilbereich, Abstand Kameraeinrichtung zu Teilbereich.

Gemäß einer alternativen Ausführungsform weist die Kameraeinrichtung zwei Kameraeinheiten auf, wobei die zwei Kameraeinheiten derart zueinander angeordnet sind, dass eine stereoskopische Abbildung des Teilbereichs durchgeführt ist. Durch die stereoskopische Abbildung des Teilbereichs wird die Sicht mit zwei Augen simuliert, so dass durch Überlagerung der Bilder einer ersten Kameraeinheit und einer zweiten Kameraeinheit der Kameraeinrichtung eine räumliche Tiefe gegeben ist. Durch die stereoskopische Abbildung des Teilbereichs ist es nicht zwingend nötig, eine Kollimierung durchzuführen.

Eine Kameraeinheit umfasst hierbei vorzugsweise einen Bildsensor wie einen CCD-Sensor oder einen CMOS-Sensor, wobei ein CMOS-Sensor bevorzugt ist. Es ist auch denkbar, dass ein CSI (camera serial interface) vorgesehen ist.

Die Kameraeinrichtung ist vorzugsweise mit der Nutzfahrzeugkabine verbunden, bevorzugt ist die Kameraeinrichtung an einer Außenseite der Nutzfahrzeugkabine angeordnet.

Weiter wird die zugrunde liegende Aufgabe auch von einem Verfahren zum Abbilden eines Teilbereichs auf einem Bildschirm gelöst, wobei der Teilbereich durch ein Objekt verdeckt wird und das Objekt zwischen dem Teilbereich und einem Fahrzeugführer und der Bildschirm zwischen dem Fahrzeugführer und dem Objekt angeordnet ist, wobei der Teilbereich sich in einem von einer Kameraeinrichtung aufgenommenen Bereich befindet, wobei das Verfahren die Verfahrensschritte Aufnehmen des Bereichs durch die Kameraeinrichtung; Erfassen einer Position zumindest eines Auges des Fahrzeugführers; Erfassen einer Position des Bildschirms; Ermitteln der Position des Teilbereichs im aufgenommenen Bereich anhand der Position des Auges und der Position des Bildschirms; Abbilden des Teilbereichs auf dem Bildschirm umfasst.

Gemäß einer vorteilhaften Ausführungsform wird vor dem Verfahrensschritt des Abbildens des Teilbereichs mittels einer Verarbeitungseinheit eine Tiefensicht in den Teilbereich implementiert. Das heißt, dass mittels der Verarbeitungseinheit, abhängig von der Anzahl der Kameraeinheiten der Kameraeinrichtung, eine Tiefensicht bzw. eine Tiefenwirkung zum aufgenommenen Bild hinzugefügt wird.

Ist genau eine Kameraeinheit vorgesehen, so wird mittels eines bekannten Algorithmus unter Verwendung des Abstandes des Auges zum Teilbereich und dem Abstand der Kameraeinheit zu dem Teilbereich eine Kollimierung des Augenbrennpunkts und des Brennpunkts der Kameraeinheit durchgeführt.

Sind zwei Kameraeinheiten vorgesehen, so sind diese vorzugsweise stereoskopisch angeordnet. Durch die stereoskopische Abbildung des Teilbereichs wird die Sicht mit zwei Augen simuliert, so dass durch Überlagerung der Bilder einer ersten Kameraeinheit und einer zweiten Kameraeinheit der Kameraeinrichtung eine räumliche Tiefe gegeben ist. Durch die stereoskopische Abbildung des Teilbereichs ist es nicht zwingend nötig, eine Kollimierung durchzuführen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: schematische Darstellung eines Nutzfahrzeugs mit einer Vorrichtung;
- Fig. 1B: schematische Darstellung eines Bereichs und eines Teilbereichs einer Kameraeinrichtung mit einer Kameraeinheit;
- Fig. 1C: schematische Darstellung eines Bereichs und eines Teilbereichs einer Kameraeinrichtung mit zwei Kameraeinheiten;
- Fig. 2: schematische Darstellung der Vorrichtung mit zwei Kameraeinheiten;
- Fig. 3: schematische Darstellung der Vorrichtung mit einer Kameraeinheit;
- Fig. 4: Flussdiagramm eines Verfahrens gemäß einer Ausführungsform.

Die in den Figuren dargestellten Bauteile und Komponenten sind nicht als maßstabsgetreu anzusehen, vielmehr können einige Bauteile oder Komponenten zum besseren Verständnis übertrieben groß dargestellt sein.

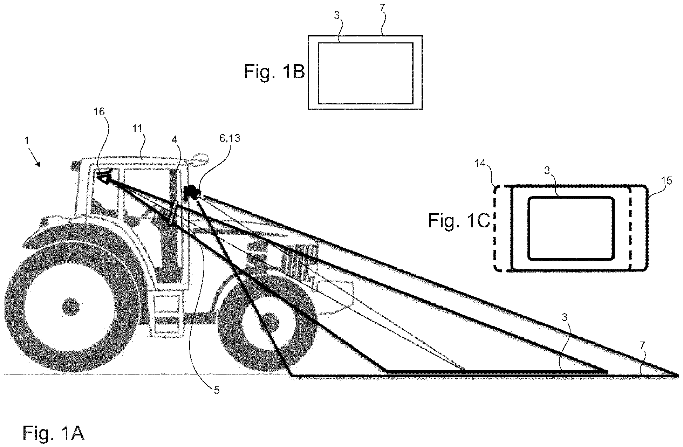

Die Figur 1A zeigt eine schematische Darstellung eines Nutzfahrzeugs 1 mit einer Vorrichtung 2 zum Abbilden eines Teilbereichs 3. Wie zu erkennen ist, ist an einer Nutzfahrzeugkabine 11 des Nutzfahrzeugs 1 eine Kameraeinrichtung 6 mit einer oder mehreren Kameraeinheiten 13, bevorzugt genau einer und weiter bevorzugt genau zwei Kameraeinheiten, angeordnet. Die Kameraeinrichtung 6 ist insbesondere an einer Außenseite 14 der Nutzfahrzeugkabine 11 angeordnet. Wie zu erkennen ist, kann mittels der Kameraeinrichtung 6 ein Bereich 7 aufgenommen werden, in welcher ein Teilbereich 3 angeordnet ist. Der Teilbereich 3 ist hierbei ein Bereich, welcher für den Fahrzeugführer, hier mittels seines Auges 16 dargestellt ist, zumindest teilweise durch ein Objekt 5, vorliegend eine Säule der Nutzfahrzeugkabine 11, verdeckt ist und nicht beobachtet werden kann. Dazu soll erfindungsgemäß der Teilbereich 3 auf einem Bildschirm 4 abgebildet werden, wodurch einfach gesagt das verdeckende Objekt 5 durchsichtig gemacht wird.

Um dies möglich zu machen, ist das Objekt 5 zwischen dem Bildschirm 4 und dem Teilbereich 3 angeordnet und der Bildschirm 3 zwischen dem Fahrzeugführer und dem Objekt 5.

Die Figuren 1B und 1C zeigen hierbei den Bereich 7 mit dem Teilbereich 3 in einer möglichen Positionierung innerhalb des Bereichs 7. Gemäß Figur 1B ist der Bereich 7 einer Kameraeinrichtung 6 mit genau einer Kameraeinheit 13 dargestellt, wohingegen gemäß Figur 1C der Bereich 7 einer Kameraeinrichtung 6 mit zwei Kameraeinheiten 13 dargestellt ist. Da die Kameraeinheiten 13 stereoskopisch angeordnet sind, weist die erste Kameraeinheit 13 einen ersten Bereich 14 und die zweite Kameraeinheit 13 einen zweiten Bereich 15 auf, welche sich zumindest teilweise überlagern und zusammen den Bereich 7 bilden.

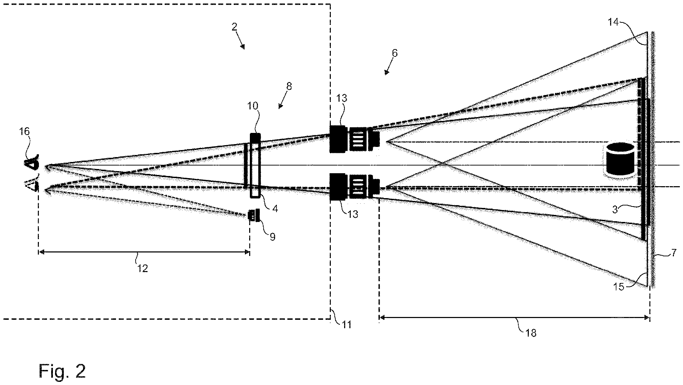

Die Figur 2 beschreibt einen schematischen Aufbau der Vorrichtung 2, wobei die Bestimmungseinrichtung 8 einen ersten Sensor 9 und einen zweiten Sensor 10 aufweist, wobei der erste Sensor 9 dazu eingerichtet und vorgesehen ist, die Position des Auges 16 relativ zu der Nutzfahrzeugkabine 11 und gegebenenfalls den Blickwinkel des Auges 16 zu erfassen, und wobei der zweite Sensor 10 dazu eingerichtet und vorgesehen ist, die Position des Bildschirms 4 relativ zu der Nutzfahrzeugkabine 11 und gegebenenfalls die Orientierung des Bildschirms 4 innerhalb der Nutzfahrzeugkabine 11 anzugeben. Vorzugsweise ist der erste Sensor 9 in der Nähe bzw. nahe des Bildschirms 4 oder an dem Bildschirm 4 angeordnet, um so möglichst genau den Blickwinkel des Auges 16 erfassen zu können. Weiter bevorzugt ist der zweite Sensor 10 an dem Bildschirm 4 angeordnet, um so möglichst genau die Position bzw. die Orientierung des Bildschirms 4 zu bestimmen.

Die Kameraeinrichtung 6 umfasst gemäß der Figur 2 eine erste Kameraeinheit 13 mit einem ersten Bereich 14 und eine zweite Kameraeinheit 13 mit einem zweiten Bereich 15, wobei die Kameraeinheiten in stereoskopischer Art und Weise angeordnet sind und sich der erste Bereich 14 und der zweite Bereich 15 teilweise überlappen. Die Position des Teilbereichs 3 innerhalb des Bereiches 7 hängt natürlich ab von dem Abstand 12 Auge 16 zu Bildschirm 4 und dem Abstand 18 von Kameraeinrichtung 6 zu dem Bereich 7. Je näher das Auge 16 dem Bildschirm 4 ist, desto größer wird der Teilbereich 3, der abgebildet werden soll. Gleiches gilt in analoger Weise für den Abstand 18 der Kameraeinheit 6 zu dem Bereich 7 bzw. dem Teilbereich 3. Je größer der Abstand 18, desto größer der Teilbereich 7.

Die gestrichelten Darstellungen der Figur 2 zeigen die Situation, wenn sich die Position des Auges 16 relativ zu der Nutzfahrzeugkabine 11 ändert. Entsprechend ändert sich hierdurch die Position des Teilbereichs 3 innerhalb des Bereiches 7.

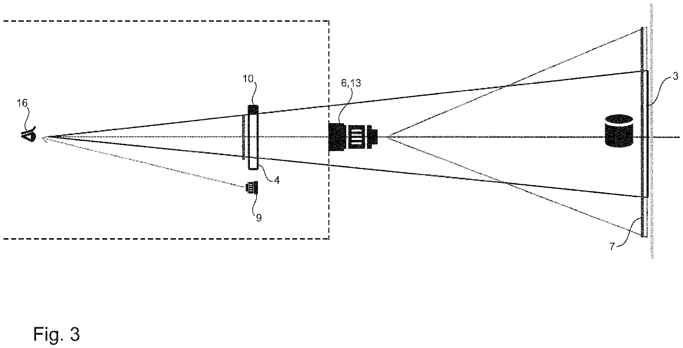

Die Figur 3 zeigt eine ähnliche Ausgestaltung wie die Figur 2, jedoch umfasst hierbei die Kameraeinrichtung 6 genau eine Kameraeinheit 13. Die Ausführungen zu den jeweiligen Bauteilen entsprechen der Beschreibung der Figur 2, wobei jedoch keine stereoskopische Anordnung der Kameraeinheiten 13 möglich ist, da nur eine einzige Kameraeinheit 13 vorgesehen ist.

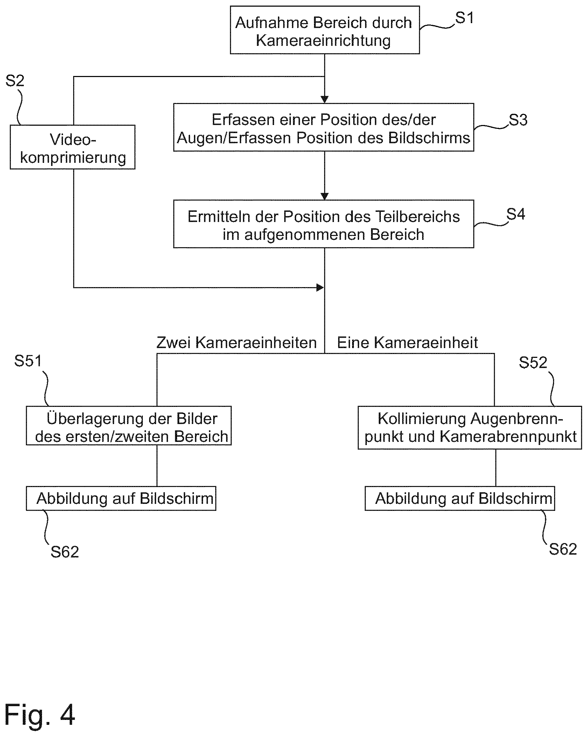

Die Figur 4 beschreibt ein mögliches Verfahren zum Abbilden eines Teilbereichs auf einem Bildschirm, wobei der Teilbereich durch das Objekt verdeckt ist und das Objekt zwischen dem Teilbereich und dem Fahrzeugführer angeordnet ist und der Bildschirm zwischen dem Fahrzeugführer und dem Objekt.

In einem ersten Schritt S1 wird mittels der Kameraeinrichtung 6 der Bereich 7 aufgenommen, insbesondere handelt es sich hierbei um eine Videoaufnahme. Bevorzugt wird der Bereich 7 kontinuierlich aufgenommen. In einem weiteren Schritt S2 wird die Videoaufnahme komprimiert und in einem weiteren Schritt S3 die Position des Auges/der Augen 16 und die Position des Bildschirms 4, jeweils relativ zu der Nutzfahrzeugkabine 11 mittels der Bestimmungseinrichtung 8, bevorzugt mittels des ersten Sensors 9 und des zweiten Sensors 10 bestimmt. Es ist hierbei auch denkbar, dass zusätzlich der Blickwinkel des Auges und die Orientierung des Bildschirms relativ zu der Nutzfahrzeugkabine 11 bestimmt werden.

Aus diesen Daten, welche im Schritt S3 bestimmt werden, kann die Position und insbesondere die Größe des Teilbereichs 3 innerhalb des aufgenommenen Bereichs 7 ermittelt werden, insbesondere mittels einer Verarbeitungseinrichtung (hier nicht gezeigt).

Mittels der komprimierten Videoaufnahme des Schrittes S3 und dem ermittelten Teilbereich abhängig von dem Bildschirm sowie dem Auge des Schrittes S4 wird weiter abhängig von der Anzahl der Kameraeinheiten 13 weiter verfahren.

Weist die Kameraeinrichtung 6 genau eine Kameraeinheit 13 auf, so ist es in einem Schritt S52 notwendig, eine Kollimierung eines Augenbrennpunkts, welcher im Teilbereich liegt, und einem Brennpunkt der Kameraeinheit durchzuführen. Mittels eines bekannten Algorithmus, welcher von einer Recheneinheit, beispielsweise einem CPU, GPU, CSI oder IC ausgeführt werden kann, kann dann eine Tiefenschärfe eingestellt werden. Nötig sind hierfür die folgenden Parameter: Abstand Auge zu Teilbereich, Abstand Kameraeinrichtung zu Teilbereich. Der Videoaufnahme wird eine entsprechende Tiefenwirkung implementiert. Anschließend wird die bearbeitete Videoaufnahme in einem Schritt S62 auf dem Bildschirm abgebildet, insbesondere durch einen Videostream.

Weist die Kameraeinrichtung 6 zwei und bevorzugt genau zwei Kameraeinheiten 13 auf, welche stereoskopisch angeordnet sind, wird das Bild der ersten Kameraeinheit 13 und das Bild der zweiten Kameraeinheit 13 mittels der Verarbeitungseinheit (hier nicht gezeigt) in einem Schritt S51 überlagert, wodurch eine Tiefenwirkung entsteht. In einem Schritt S61 wird die bearbeitete Videoaufnahme auf dem Bildschirm abgebildet, insbesondere durch einen Videostream.

### Bezugszeichenliste

- 1: Nutzfahrzeug
- 2: Vorrichtung
- 3: Teilbereich
- 4: Bildschirm
- 5: Objekt
- 6: Kameraeinrichtung
- 7: Bereich
- 8: Bestimmungseinrichtung
- 9: erster Sensor
- 10: zweiter Sensor
- 11: Nutzfahrzeugkabine
- 12: Abstand Auge zu Bildschirm
- 13: Kameraeinheit
- 14: erster Bereich
- 15: zweiter Bereich
- 16: Auge
- 17: Außenseite Nutzfahrzeugkabine
- 18: Abstand Kameraeinrichtung zu Bereich

## Patentansprüche

1. Nutzfahrzeug (1) mit einer Vorrichtung (2) zum Abbilden eines Teilbereichs (3) auf einem Bildschirm (4), wobei der Teilbereich (3) zumindest teilweise durch ein Objekt (5) verdeckt ist und wobei das Objekt (5) zwischen dem Teilbereich (3) und einem Fahrzeugführer und der Bildschirm (4) zwischen dem Fahrzeugführer und dem Objekt (5) angeordnet ist, wobei der Teilbereich (3) sich in einem von einer Kameraeinrichtung (6) aufgenommenen Bereich (7) befindet,
**dadurch gekennzeichnet, dass**
die Vorrichtung (2) eine Bestimmungseinrichtung (8) aufweist, wobei die Bestimmungseinrichtung (8) einen ersten Sensor (9) und einen zweiten Sensor (10) aufweist, wobei der erste Sensor (9) dazu vorgesehen und eingerichtet ist, eine Position zumindest eines Auges (16) des Fahrzeugführers relativ zu der Nutzfahrzeugkabine (11) zu bestimmen, und wobei der zweite Sensor (10) dazu vorgesehen und eingerichtet ist, eine Position des Bildschirms (4) relativ zu der Nutzfahrzeugkabine (11) zu bestimmen, wobei der erste Sensor (9) und der zweite Sensor (10) an dem Bildschirm (4) angeordnet sind, und wobei durch die Bestimmungseinrichtung (8) mittels der Position des Auges (16) und der Position des Bildschirms (4) die Position des Teilbereichs (3) im aufgenommenen Bereich (7) bestimmt ist und dieser Teilbereich (3) durch den Bildschirm (4) dargestellt ist.

2. Nutzfahrzeug (1) nach Anspruch 1,
**dadurch gekennzeichnet, dass**
mittels des ersten Sensors (9) zusätzlich ein Blickwinkel und mittels des zweiten Sensors (10) zusätzlich die Orientierung des Bildschirms (4) relativ zu einer Nutzfahrzeugkabine (11) bestimmt sind.

3. Nutzfahrzeug (1) nach einem der vorangegangen Ansprüche,
**dadurch gekennzeichnet, dass**
der erste Sensor (9) und der zweite Sensor (10) jeweils als ein Infrarot-Sensor ausgebildet sind.

4. Nutzfahrzeug (1) nach einem der vorangegangenen Ansprüche,
**dadurch gekennzeichnet, dass**
mittels der Bestimmungseinrichtung (8) aus der Position des Auges (16) und der Position des Bildschirms (4) ein Abstand (12) des Auges (16) zu dem Bildschirm (4) bestimmt ist.

5. Nutzfahrzeug (1) nach einem der vorangegangenen Ansprüche,
**dadurch gekennzeichnet, dass**
die Kameraeinrichtung (6) genau eine Kameraeinheit (13) aufweist.

6. Nutzfahrzeug (1) nach einem der Ansprüche 1-4,
**dadurch gekennzeichnet, dass**
die Kameraeinrichtung (6) zwei Kameraeinheiten (13) aufweist, wobei die zwei Kameraeinheiten (13) derart zueinander angeordnet sind, dass eine stereoskopische Abbildung des Teilbereichs (3) durch die Kameraeinrichtung (6) durchgeführt ist.

7. Verfahren zum Abbilden eines Teilbereichs (3) auf einem Bildschirm (4), wobei der Teilbereich (3) durch ein Objekt (5) verdeckt wird und das Objekt (5) zwischen dem Teilbereich (3) und einem Fahrzeugführer und der Bildschirm (4) zwischen dem Fahrzeugführer und dem Objekt (5) angeordnet ist, wobei der Teilbereich (3) sich in einem von einer Kameraeinrichtung (6) aufgenommenen Bereich (7) befindet,
**gekennzeichnet durch** die aufeinanderfolgenden Verfahrensschritte:
Aufnehmen des Bereichs (7) durch die Kameraeinrichtung (6);
Erfassen einer Position zumindest eines Auges (16) des Fahrzeugführers mittels eines ersten Sensors (9) einer Bestimmungseinrichtung (8);
Erfassen einer Position des Bildschirms (4) mittels eines zweiten Sensors (10) der Bestimmungseinrichtung (8);
Ermitteln der Position des Teilbereichs (3) im aufgenommenen Bereich (7) anhand der Position des Auges (17) und der Position des Bildschirms (4) mittels der Bestimmungseinrichtung (8);
Abbilden des Teilbereichs (3) auf dem Bildschirm (4);
wobei der erste Sensor (9) und der zweite Sensor (10) an dem Bildschirm (4) angeordnet sind.

8. Verfahren nach Anspruch 7,
**dadurch gekennzeichnet, dass**
vor dem Verfahrensschritt des Abbildens des Teilbereichs (3) mittels einer Verarbeitungseinheit eine Tiefenwirkung in den abgebildeten Teilbereich (3) implementiert wird.

## Claims

1. A utility vehicle (1) comprising a device (2) for displaying a portion (3) on a screen (4), the portion (3) being concealed by an object (5) at least in part, and the object (5) being arranged between the portion (3) and a vehicle driver and the screen (4) being arranged between the vehicle driver and the object (5), the portion (3) being located in a region (7) that is recorded by a camera setup (6),
**characterised in that**
the device (2) has a determination device (8), the determination device (8) having a first sensor (9) and a second sensor (10), the first sensor (9) being provided and set up to determine a position of at least one eye (16) of the vehicle driver relative to a utility vehicle cabin (11), and the second sensor (10) being provided and set up to determine a position of the screen (4) relative to the utility vehicle cabin (11), the first sensor (9) and the second sensor (10) being arranged on the screen (4), and the determination device (8) determining the position of the portion (3) in the recorded region (7) using the position of the eye (16) and the position of the screen (4), and this portion (3) being represented by the screen (4).

2. The utility vehicle (1) according to claim 1,
**characterised in that**
a viewing angle is additionally determined by means of the first sensor (9) and the orientation of the screen (4) relative to a utility vehicle cabin (11) is additionally determined by means of the second sensor (10).

3. The utility vehicle (1) according to any of the preceding claims,
**characterised in that**
the first sensor (9) and the second sensor (10) are each designed as an infrared sensor.

4. The utility vehicle (1) according to any of the preceding claims,
**characterised in that**
the determination device (8) determines a distance (12) from the eye (16) to the screen (4) from the position of the eye (16) and the position of the screen (4).

5. The utility vehicle (1) according to any of the preceding claims,
**characterised in that**
the camera setup (6) has exactly one camera unit (13).

6. The utility vehicle (1) according to any of claims 1-4,
**characterised in that**
the camera setup (6) has two camera units (13), the two camera units (13) being arranged relative to one another such that stereoscopic imaging of the portion (3) is performed by the camera setup (6).

7. A method for displaying a portion (3) on a screen (4), the portion (3) being concealed by an object (5) and the object (5) being arranged between the portion (3) and a vehicle driver, and the screen (4) being arranged between the vehicle driver and the object (5), the portion (3) being located in a region (7) that is recorded by a camera setup (6),
**characterised by** the successive method steps of:
recording the region (7) by the camera setup (6);
detecting a position of at least one eye (16) of the vehicle driver by means of a first sensor (9) of a determination device (8);
detecting a position of the screen (4) by means of a second sensor (10) of the determination device (8);
determining the position of the portion (3) in the recorded region (7) based on the position of the eye (17) and the position of the screen (4) by means of the determination device (8);
displaying the portion (3) on the screen (4);
wherein the first sensor (9) and the second sensor (10) are arranged on the screen (4).

8. The method according to claim 8,
**characterised in that**
a depth effect is implemented in the portion (3) by means of a processing unit before the method step of displaying the portion (3).

## Revendications

1. Véhicule utilitaire (1) comportant un dispositif (2) pour l'affichage d'une région partielle (3) sur un écran (4), la région partielle (3) étant cachée au moins en partie par un objet (5) et l'objet (5) étant disposé entre la région partielle (3) et un conducteur de véhicule et l'écran (4) étant disposé entre le conducteur de véhicule et l'objet (5), la région partielle (3) se trouvant dans une région (7) enregistrée par un système de caméra (6),
**caractérisé par le fait que**
le dispositif (2) présente un dispositif de détermination (8), le dispositif de détermination (8) présentant un premier capteur (9) et un second capteur (10), le premier capteur (9) étant disposé et configuré pour déterminer une position d'au moins un œil (16) du conducteur de véhicule par rapport à la cabine (11) du véhicule utilitaire, et le second capteur (10) étant disposé et configuré pour déterminer une position de l'écran (4) par rapport à la cabine (11) du véhicule utilitaire, le premier capteur (9) et le second capteur (10) étant disposés sur l'écran (4), et la position de la région partielle (3) étant déterminée dans la région enregistrée (7) au moyen de la position de l'œil (16) et de la position de l'écran (4) par le dispositif de détermination (8) et cette région partielle (3) étant représentée par l'écran (4).

2. Véhicule utilitaire (1) selon la revendication 1,
**caractérisé par le fait qu'**
un angle de vision est déterminé de façon supplémentaire au moyen du premier capteur (9) et l'orientation de l'écran (4) par rapport à une cabine (11) du véhicule utilitaire est déterminée de façon supplémentaire au moyen du second capteur (10).

3. Véhicule utilitaire (1) selon l'une des revendications précédentes,
**caractérisé par le fait que**
le premier capteur (9) et le second capteur (10) sont conçus chacun en tant que capteur infrarouge.

4. Véhicule utilitaire (1) selon l'une des revendications précédentes,
**caractérisé par le fait qu'**
une distance (12) de l'œil (16) par rapport à l'écran (4) est déterminée à partir de la position de l'œil (16) et de la position de l'écran (4) au moyen du dispositif de détermination (8).

5. Véhicule utilitaire (1) selon l'une des revendications précédentes,
**caractérisé par le fait que**
le système de caméra (6) présente exactement une unité de caméra (13).

6. Véhicule utilitaire (1) selon l'une des revendications 1 à 4,
**caractérisé par le fait que**
le système de caméra (6) présente deux unités de caméra (13), les deux unités de caméra (13) étant disposées l'une par rapport à l'autre de telle sorte qu'une imagerie stéréoscopique de la région partielle (3) est effectuée par le système de caméra (6).

7. Procédé d'affichage d'une région partielle (3) sur un écran (4), la région partielle (3) étant cachée par un objet (5) et l'objet (5) étant disposé entre la région partielle (3) et un conducteur de véhicule et l'écran (4) étant disposé entre le conducteur de véhicule et l'objet (5), la région partielle (3) se trouvant dans une région (7) enregistrée par un système de caméra (6),
**caractérisé par** les étapes successives de procédé :
- enregistrer la région (7) par le système de caméra (6) ;
- détecter une position d'au moins un œil (16) du conducteur de véhicule au moyen d'un premier capteur (9) d'un dispositif de détermination (8) ;
- détecter une position de l'écran (4) au moyen d'un second capteur (10) du dispositif de détermination (8) ;
- déterminer la position de la région partielle (3) dans la région (7) enregistrée sur la base de la position de l'œil (17) et de la position de l'écran (4) au moyen du dispositif de détermination (8) ;
- afficher la région partielle (3) sur l'écran (4) ;
le premier capteur (9) et le second capteur (10) étant disposés sur l'écran (4).

8. Procédé selon la revendication 7,
**caractérisé par le fait qu'**
avant l'étape de procédé de l'affichage de la région partielle (3), un effet de profondeur est mis en oeuvre dans la région partielle (3) affichée au moyen d'une unité de traitement.
